Europäisches Patentamt

European Patent Office

Office européen des brevets

(19)

(11) Numéro de publication: **0 081 106**
**A1**

(12) # DEMANDE DE BREVET EUROPEEN

(21) Numéro de dépôt: 82110573.1

(22) Date de dépôt: 16.11.82

(51) Int. Cl.³: **B 23 K 9/10**

(30) Priorité: 08.12.81 CA 391754

(43) Date de publication de la demande:
15.06.83 Bulletin 83/24

(84) Etats contractants désignés:
AT BE CH DE FR GB IT LI LU NL SE

(71) Demandeur: HYDRO-QUEBEC
75, Boulevard Dorchester Ouest
Montréal Québec H2Z 1A4(CA)

(72) Inventeur: Simoneau, Raynald
2130 De Salaberry
St-Bruno Québec, J3V 4N6(CA)

(72) Inventeur: Pelletier, Jean-Marc
4975 Montée Gagnon
St-Louis de Terrebonne Québec, J0N 1N0(CA)

(72) Inventeur: Di Vincenzo, Antonio
7350 Des Closeries
Ville d'Anjou Québec, H1M 1J5(CA)

(72) Inventeur: Boillot, Jean-Paul
574 Lemoyne
Beloeil Québec, J3G 2C2(CA)

(74) Mandataire: Casalonga, Axel et al,
BUREAU D.A. CASALONGA OFFICE JOSSE & PETIT
Baaderstrasse 12-14
D-8000 München 5(DE)

(54) Circuit de protection contre les chocs electriques en soudage.

(57) L'invention est relative à un circuit de commande de l'alimentation d'une électrode, de type enrobé par exemple, utilisée dans une opération de soudage à arc électrique, et qui est destiné à protéger les soudeurs contre les chocs électriques en abaissant la tension en circuit ouvert entre l'électrode et la pièce à souder. L'alimentation peut être à courant alternatif ou continu. Le circuit comporte une source de tension (+) à impédance élevée (D1, R5, R6) appliquée à l'électrode, un circuit de détection (A1, C2, D3, R7-R11) déterminant la valeur de l'impédance existant entre l'électrode et la pièce à souder, qui compare cette impédance détectée à une impédance seuil et qui génère un signal de contrôle lorsque l'impédance détectée est inférieure à l'impédance seuil. Ce signal de contrôle, lorsque émis, met en fonctionnement un circuit d'excitation (A2...LED) qui active alors un dispositif d'alimentation (OC1...SCR1) monté en série entre le bloc d'alimentation de l'électrode et l'électrode elle-même.

./...

CIRCUIT D'APPOINT DE COMMANDE DE LA TENSION
POUR SOUDEUSE ÉLECTRIQUE

Fig. 1

Circuit de protection contre les chocs électriques en soudage.

La présente invention a trait à la commande de l'alimentation d'une électrode de type utilisé lors d'une opération de soudage à l'arc électrique, en particulier une électrode enrobée, recouverte d'une enveloppe protectrice. Cette commande permet de protéger les soudeurs contre les chocs électriques au moment ou la tension en circuit ouvert entre la pointe de l'électrode et la pièce à souder est élevée.

Il arrive fréquemment que les soudeurs qui ont à travailler au moyen d'électrode à arc électrique dont la tension d'amorce est assez élevée, subissent des chocs électriques, en particulier lorsque l'opération de soudage s'effectue en milieu humide, par exemple sur des turbines hydrauliques, des déversoirs, des systèmes de refroidissement d'eau, etc.., où l'isolation électrique entre ces soudeurs et la pièce à souder, habituellement mise à la terre, ou encore avec le porte-électrode, est extrêmement difficile à réaliser. En pratique, ces chocs électriques sont suffisamment fréquents et intenses pour créer chez le soudeur un sentiment de crainte et quelque fois même de répulsion nerveuse face à la fréquence de ces chocs électriques, quoique ceux-ci ne causent la plupart du temps aucune blessure sérieuse. Le but de la présente invention est généralement d'éliminer les risques de chocs électriques en commandant la tension d'un circuit ouvert de l'ensemble électrode-pièce à souder, cette tension correspondant alors à celle nécessaire à l'amorce de l'arc électrique.

En effet, il a été déterminé que la probabilité d'un choc électrique au moment où se développe entre l'électrode et la pièce, alors en circuit ouvert, une tension d'amorce de l'arc, habituellement d'environ 80 volts, est fort élevée. Une fois amorcé, cet arc électrique est maintenu sous une tension beaucoup plus faible, entre l'électrode et la pièce, celle-ci étant de l'ordre de 15 à 30 volts. Afin de diminuer ce risque de choc dû à la tension de circuit ouvert, divers types de circuits fonctionnant de façon manuelle ou automatique et utilisant des interrupteurs mécaniques ont été suggérés, circuits visant principalement à couper toute alimentation de la source au moment de l'extinction de l'arc électrique. Mais ces interrupteurs mécaniques souffraient d'un défaut majeur, soit leur faible temps de réponse, de sorte qu'aucun des circuits proposés n'a jamais offert une solution efficace aux problèmes de sécurité causés par l'utilisation des électrodes à arc électriques ; de là d'ailleurs leur popularité mitigée auprès des soudeurs.

Un autre objectif de la présente invention réside dans l'utilisation de composants entièrement électroniques qui sont d'un fonctionnement sûr, efficace et rapide. Le circuit formé de ces composants permet d'éliminer les risques et les dangers relatifs à la présence d'une tension de circuit ouvert élevé et n'apporte en outre aucune perturbation dans l'opération de soudage due au fait d'une modification dans l'alimentation de la source génératrice.

Un autre objectif de la présente invention réside dans le fait que le circuit de commande de l'alimentation à l'électrode peut contrôler non seulement une alimentation à courant continu mais également à courant alternatif. De plus, le circuit de commande peut être incorporé à tout bloc d'alimentation existant ou encore être inséré en série entre la sortie d'un bloc d'alimentation et l'électrode.

La présente invention réside donc dans un circuit de commande de l'alimentation d'une électrode utilisée dans une opération de soudage à arc électrique, comportant un dispositif de mesure servant à déterminer la valeur de l'impédance dynamique entre ladite électrode et une pièce à souder, et un dispositif d'alimentation monté en série entre ladite alimentation et l'électrode, en régime normal, ce dispositif d'alimentation étant commandé par ledit dispositif de mesure d'impédance de sorte à mettre ledit dispositif d'alimentation en conduction lorsque la valeur de l'impédance dynamique détectée par le dispositif de mesure est en déça d'une valeur d'impédance seuil prédéterminée pour permettre l'alimentation de l'électrode.

Des modes de réalisation préférés de la présente invention seront décrits ci-après avec référence aux dessins annexés, dans lesquels :

la figure 1 illustre une réalisation du circuit de commande suivant la présente invention lorsque l'alimentation est à courant continu ;

La figure 2 montre schématiquement un circuit de commande avec alimentation à courant alternatif ; et

la figure 3 illustre une variante de réalisation du circuit de commande avec alimentation à courant alternatif.

Avant d'entreprendre la description comme telle des diverses figures, considérons en premier lieu les facteurs reliés aux risques de chocs électriques de la part des soudeurs lors du processus de soudage par la méthode dite à arc électrique. Nous mettrons particulièrement l'emphase sur les facteurs prédominants lorsque le processus de soudage est effectué en milieu humide.

Il est bien connu que le facteur principal qui est cause de chocs électriques correspond à l'intensité du courant qui circule dans le corps humain. Les effets de ce courant peuvent être plus ou moins néfastes suivant sa fréquence et sa durée, les courants alternatifs étant les plus dangereux. De façon générale, on sait qu'un courant alternatif d'approximativement 100 mA est habituellement fatal alors qu'un courant d'environ 16 mA produit une perte de contrôle et qu'un courant variant de 1 à 2 mA est considéré comme un seuil de douleur perceptible. Ce seuil de douleur est celui que nous considérons comme correspondant au niveau maximum permis par le présent circuit de commande d'alimentation afin d'éviter tout choc électrique désagréable.

La détermination de la tension permise entre les parties du corps humain, en fonction du niveau de courant désiré, requiert une connaissance de la résistivité de ces parties. On sait que la résistance minimum du corps humain lorsque la peau est mouillée ou humide est supérieure à 2 k ohms (lorsque le courant traverse deux couches de peau), principalement due à la résistance de la peau elle-même. Mais, lorsque la peau est partiellement détruite, cette résistance peut être aussi basse que 1 k ohm, ce qui explique que des chocs électriques se sont avérés fatals à une tension de 110 volts C.A. Pour une peau normalement humide, la tension à l'électrode ne devra pas être supérieure à 2 volts si on veut éviter l'application d'un courant supérieur à 1 mA.

D'autre part, des expériences effectuées sur le comportement de l'impédance entre la pointe d'une électrode et une plaque ou pièce métallique à souder, ont démontrées que la

4 0081106

résistance ne chute jamais sous 6.41 k ohms lorsque le flux à la pointe de l'électrode n'est pas brisé. Toutefois, dès que ce flux est coupé de la pointe de l'électrode, la résistance tombe à près de 0 ohm, au moins pour une courte période de temps, que la pièce de métal soit rouillée ou non. Comme on sait que les soudeurs travaillent habituellement de façon discontinue, c'est-à-dire en brisant fréquemment le flux à la pointe de l'électrode, on note donc que cette dernière valeur de résistance est fort éloignée de la valeur d'impédance mesurée du corps humain.

Dans le cas du présent circuit de commande de l'alimentation de l'électrode, le principe de fonctionnement mis de l'avant consiste à mesurer en tout temps l'impédance dynamique de l'ensemble électrode-plaque et, compte tenu de l'impédance dans les pires conditions, soit en milieu humide, à concevoir un circuit qui enclenche automatiquement et rapidement un dispositif monté en série entre l'alimentation et l'électrode afin d'éliminer ou de réduire au maximum les risques de chocs électriques pour l'opérateur dans le processus de soudage à arc électrique. Dans un optique de sécurité maximale, le seuil d'impédance a été fixé à 500 ohms, car cette valeur est beaucoup moindre que celle de la résistance minimum de la peau, en milieu humide, mais de beaucoup supérieure à la résistance électrode-plaque comme mentionnée précédemment. Le choix de cette valeur permet la conception d'un circuit qui réagit rapidement à un démarrage d'une opération de soudage et qui n'est pas sujet à de faux démarrages lorsque par exemple une main de l'opérateur est en contact avec la pointe de l'électrode alors que l'autre main l'est avec la plaque métallique, même dans le cas où les mains sont humides ou mouillées.

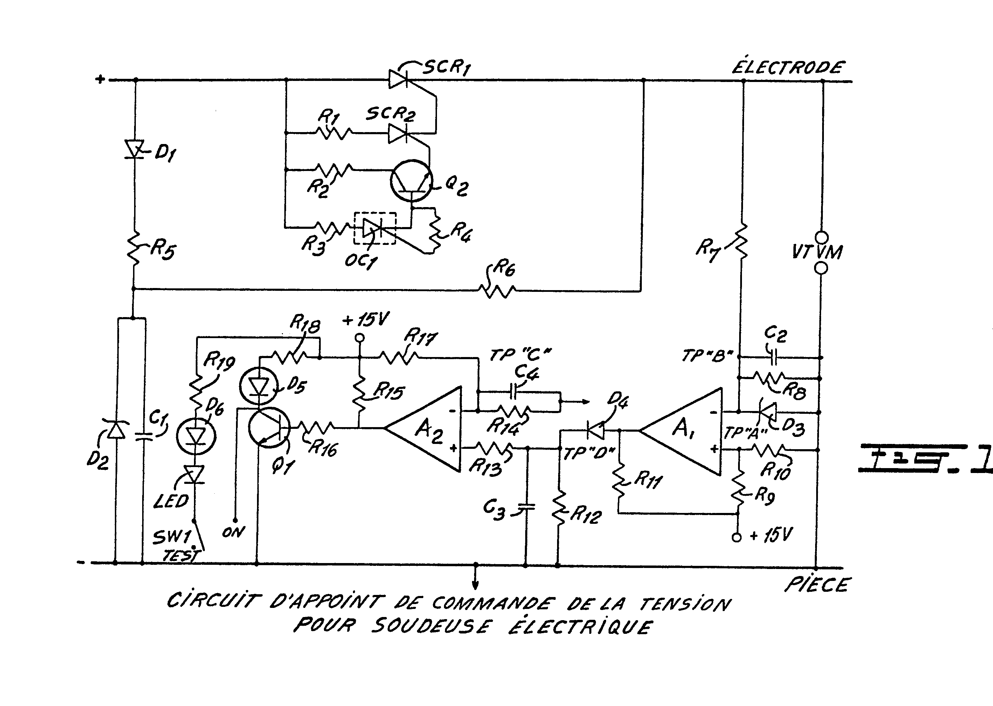

La figure 1 illustre un mode de réalisation d'un circuit de commande incorporant le principe de fonctionnement fondamental de la présente invention. Il est à noter que ce circuit de commande peut être incorporé directement à un bloc d'alimentation d'une machine à souder ou encore être relié en série entre la sortie de ce bloc d'alimentation et l'électrode enrobé servant à la soudure. Comme montré, le circuit de commande est constitué d'un dispositif d'alimentation à courant continu qui, lorsque enclenché, permet d'appliquer à la pointe de l'électrode l'énergie fournie par le bloc d'alimentation de la machine à souder, et qui, dans le cas contraire, agit comme interrupteur ouvert entre le bloc d'alimentation et l'électrode de sorte à couper tout transfert d'énergie.

Ce dispositif d'alimentation comporte un opto-isolateur OC1 muni d'une diode émettrice de lumière qui, lorsque traversée par un courant, met en conduction le transistor Q2. Ce transistor Q2 qui est relié à la gachette d'une diode au silicium commandé SCR2 (un thyristor) qui à son tour émet un signal sur la gachette de la diode au silicium commandé principal SCR1. Le circuit est ainsi fermé et l'électrode de soudure est mise sous tension par le bloc d'alimentation à courant continu de la machine à souder. Par contre, lorsqu'aucun courant ne circule à travers la diode émettrice de lumière de l'opto-isolateur OC1, les diodes commandées SCR1 et SCR2 ainsi que le transistor Q2 ne sont pas conducteurs et aucune tension n'apparaît à la pointe de l'électrode de soudure. Ce dispositif d'alimentation est enclenché lorsque l'impédance entre l'électrode et la pièce à souder est inférieure à une impédance seuil qui a été fixée ici à 500 ohms.

D'autre part afin de mesurer l'impédance entre la pointe de l'électrode et la pièce à souder, qui est mise à la terre, une tension doit être appliquée à la pointe de l'électrode lorsque le dispositif d'alimentation est ouvert. Une source de tension à haute impédance est alors prévue ; celle-ci est dérivée du bloc d'alimentation de la machine à souder à travers la diode D1 et les résistances R5 et R6. Le condensateur C1 est utilisé pour filtrer cette tension alors que la diode D2 limite celle-ci à une valeur maximum de 12 volts. Avec cet arrangement, la résistance R6 se trouve à limiter le courant à une valeur d'environ 0.3 mA, ce qui représente un niveau de courant sécuritaire et confortable advenant son passage à travers le corps humain, comme indiqué précédemment.

Le circuit de commande d'alimentation comporte en outre un dispositif de détection qui mesure la tension fournie à la pointe de l'électrode par la source haute impédance et qui compare cette tension à une tension de référence équivalente à celle qui serait mesurée au point TPB si une résistance égale ou moindre que 500 ohms était reliée à la pointe de l'électrode.

Ce dispositf de détection comporte une résistance R7, un condensateur C2 monté en parallèle avec une résistance R8 et une diode D3 ainsi que de l'amplificateur A1 et des résistances R9, R10 et R11. Lorsque la pointe de l'électrode n'est pas en contact avec la plaque à souder, elle est alors sous une tension de 12 volts, ce qui représente une tension de 89 mV appliquée à l'entrée négative de A1 et cette même tension apparaît à l'entrée positive de A1. La sortie de l'amplificateur A1 est alors soumise à une tension négative et le thyristor SCR1 demeure non-conducteur.

De même, si l'opérateur touche le bout de l'électrode, la résistance de sa peau étant assez élevée, comme on l'a vu précédemment, la sortie de A1 demeurera négative et le thyristor SCR1 non-conducteur. Par contre, aussitôt que la pointe de l'électrode touche à la pièce à souder, qui est mise à la terre, la résistance devient inférieure à 500 ohms et la tension à la sortie de l'amplificateur A1 devient positive, ce qui a pour effet d'actionner un dispositif d'excitation qui alimente la diode émettrice de lumière LED de l'opto-isolateur OC1 qui entre alors en conduction pour mettre à feu le thyristor SCR1. L'électrode de soudure est alors mise sous la tension d'amorçage de l'arc électrique requise.

La diode D4, le condensateur C3 et la résistance R12 forment un circuit de temporisation qui améliore l'efficacité de la mise à feu du thyristor SCR1, ce qui est particulièrement utile lorsque la pointe de l'électrode rebondit par a-coup sur la pièce à souder, ou encore lorsqu'une électrode à démarrage lent est utilisée.

Un interrupteur SW1 a été prévu afin de permettre de vérifier l'efficacité du circuit sans avoir à mettre à feu le thyristor CSR1. A la position "test", aucun courant ne traverse la diode émettrice de lumière LED de l'opto-isolateur OC1, mais la diode émettrice de lumière D5 sera activée pour indiquer un fonctionnement adéquat ou non du circuit. A la position "ON", la diode émettrice de lumière LED de l'opto-isolateur OC1 est excitée lorsqu'activée par une tension adéquate. Par ailleurs, une diode émettrice de lumière D6 est utilisée simplement comme indicateur visuel.

Le circuit de commande décrit ci-haut préconise l'utilisation d'un bloc d'alimentation d'une machine à souder

0081106

de type à courant continu. Toutefois, il est possible de modifier ce circuit pour une application avec bloc d'alimentation à courant alternatif. Dans ce cas, le dispositif de détection de même que le dispositif d'excitation ne requiert aucune modification, mais la source de tension à haute impédance doit être légèrement modifiée de sorte à la rendre flottante par rapport à la machine à souder.

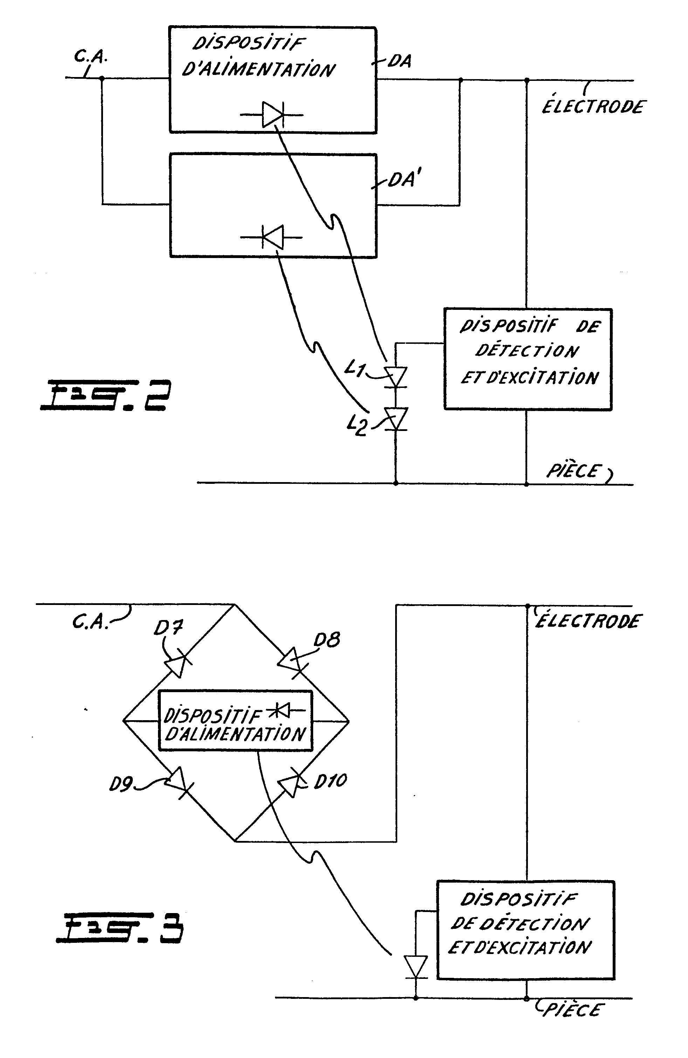

La figure 2 montre une variante du dispositif d'alimentation lorsqu'utilisé avec un bloc d'alimentation à courant alternatif. En ce cas, un second dispositif d'alimentation DA' est inséré en parallèle au premier dispositif d'alimentation DA, mais de direction opposée puisque les diodes émettrices de lumière L1 et L2 des opto-isolateurs respectifs sont montés en série.

La figure 3 illustre une autre configuration de l'arrangement du dispositif d'alimentation pour bloc d'alimentation à courant alternatif. En ce cas, ce dispositif d'alimentation est simplement relié à chacun des points d'intersection extrêmes d'un pont de diodes D7 à D10, comme montré.

Le circuit de commande d'alimentation décrit ci-haut a été dûment expérimenté, surtout à l'aide d'électrodes enrobées, et s'est avéré d'une grande efficacité dans l'élimination des chocs électriques pour les soudeurs, en particulier lorsque l'opération de soudage à arc électrique est effectuée en milieu humide. Il est entendu que des modifications évidentes peuvent être apportées aux dessins des circuits illustrés, ces modifications sont toutefois considérées comme parties intégrantes de la présente invention et doivent être interprétées à la lumière des revendications qui suivent.

8    0081106

## REVENDICATIONS

1. Circuit de commande de l'alimentation d'une électrode utilisé dans une opération de soudage à arc électrique, caractérisé par le fait qu'il comporte un dispositif de mesure (A1, C2, D3, R7-R11) servant à déterminer la valeur de l'impédance dynamique entre ladite électrode et une pièce à souder ; et un dispositif d'alimentation SCR1....OC1) monté en série avec ladite alimentation et l'électrode, ce dispositif d'alimentation étant commandé par ledit dispositif de mesure d'impédance de sorte à mettre ledit dispositif d'alimentation en conduction lorsque la valeur de l'impédance dynamique détectée par ledit dispositif de mesure est en déça d'une valeur d'impédance seuil prédéterminée pour permettre l'alimentation de l'électrode.

2. Circuit de commande selon la revendication 1, caractérisé par le fait que l'alimentation est à courant continu et que ledit circuit d'alimentation inclut un semi-conducteur (SCR1) avec électrode de commande monté directement entre ladite alimentation et ladite électrode de soudage.

3. Circuit de commande selon la revendication 2, caractérisé par le fait que ledit semi-conducteur est un thyristor de puissance (SCR1).

4. Circuit de commande selon la revendication 2, caractérisé par le fait que le dispositif de mesure inclut un circuit de mise à feu (A2...LED) de l'électrode de commande dudit semi-conducteur (OC1...SCR1).

5. Circuit de commande selon la revendication 4, caractérisé par le fait que ledit circuit de mise à feu est sous le contrôle dudit dispositif de mesure qui inclut un dispositif d'excitation (A2...Q1) du circuit de mise à feu lorsque l'impédance entre ladite électrode et la pièce à souder est inférieure à ladite impédance seuil.

6. Circuit de commande selon la revendication 1, caractérisé par le fait que ledit dispositif de mesure inclut une source de tension à impédance élevée (D1, R5, R6) appliquant une faible tension de la pointe de l'électrode en circuit ouvert, cette tension appliquée étant inférieure à celle pouvant provoquer un choc électrique à un utilisateur de ladite électrode.

7. Circuit de commande selon la revendication 5, caractérisé par le fait que ledit circuit de mise à feu inclut un élément opto-isolateur (OC1) avec diode émettrice de lumière (LED), ledit circuit de mise à feu étant opérant lorsque ladite diode (LED) est traversée par un courant généré par ledit circuit d'excitation (A2...Q1) dudit dispositif de mesure.

8. Circuit de commande selon la revendication 7, caractérisé par le fait que ledit dispositif de mesure inclut un dispositif de temporisation (D4, C3) pour maintenir actif ledit dispositif d'excitation (A2...Q1) du circuit de mise à feu lorsque l'impédance mesurée entre l'électrode et la pièce à souder est inférieure à ladite impédance seuil de sorte à permettre une amorce de l'arc électrique lorsqu'une électrode à démarrage lent est utilisée.

9. Circuit de commande selon la revendication 1, caractérisé par le fait que ladite alimentation est à courant alternatif et que ledit dispositif d'alimentation inclut deux semi-conducteurs (DA, DA'), chacun avec électrode de commande, montés tête-bêche.

10. Circuit de commande selon la revendication 9, caractérisé par le fait que lesdits semi-conducteurs sont des thyristors de puissance.

11. Circuit de commande selon la revendication 9, caractérisé par le fait que chaque semi-conducteur (DA, DA') du dispositif d'alimentation inclut un circuit de mise à feu de l'électrode de commande respective (L1, L2).

12. Circuit de commande selon la revendication 11, caractérisé par le fait que les circuits de mise à feu sont sous le contrôle d'un dispositif d'excitation inclus dans ledit dispositif de mesure pour mettre à feu les électrodes de commande respectives (L1, L2) lorsque l'impédance entre ladite électrode à souder et la pièce est inférieure à ladite impédance seuil.

13. Circuit de commande selon la revendication 12, caractérisé par le fait que chaque circuit de mise à feu inclut un élément opto-isolateur avec diode émettrice de lumière, chaque circuit de mise à feu étant opérant lorsque leur diode respectives (L1, L2) est traversée par un courant généré par ledit circuit d'excitation.

14. Circuit de commande selon la revendication 1,

**0081106**

caractérisé en ce que ladite alimentation est à courant alternatif et que ledit dispositif d'alimentation est inséré entre
des points de contact opposés d'un pont de diodes (Fig. 3).

15. Circuit de commande de l'alimentation d'une électrode enrobée utilisée dans une opération de soudage à arc
électrique, caractérisé par le fait qu'il comporte une source de
tension (+) à impédance élevée (D1, R5, R6) appliquée à ladite
électrode ; un circuit de détection (A1, C2, D3, R7-R11)
déterminant la valeur de l'impédance existant entre ladite électrode et une pièce à souder, comparant cette impédance à une
valeur d'impédance seuil et générant un signal de contrôle
lorsque l'impédance détectée est inférieure à ladite impédance
seuil ; un circuit d'excitation (A2...Q1) mis en fonctionnement
sur réception dudit signal de contrôle ; un dispositif d'alimentation incluant au moins un thyristor (SCR1) et monté en série
entre ladite alimentation (+) et ladite électrode, ledit thyristor étant mis à feu par ledit circuit d'excitation lorsque ce
dernier est activé.

16. Circuit de commande selon la revendication 15,
caractérisé par le fait que ladite alimentation est à courant
continu et que le dispositif d'alimentation inclut un circuit de
mise à feu comportant un élément opto-isolateur (OC1) avec diode
émettrice de lumière (LED), ladite diode déclenchant le fonctionnement de l'élément opto-isolateur (OC1) pour la mise à feu du
thyristor (SCR1) lorsque traversée par un courant généré par
ledit circuit d'excitation (A2...Q1).

17. Circuit de commande selon la revendication 15,
caractérisé par le fait que ladite alimentation est à courant
aîternatif et que ledit dispositif d'alimentation inclut deux
thyristors montés tête-bêche, chaque thyristor étant relié à
un circuit de mise à feu respectif mis en fonctionnement sous
l'action dudit circuit d'excitation (Fig. 2).

18. Circuit de commande selon la revendication 15,
caractérisé par le fait que ladite alimentation est à courant
alternatif et que ledit dispositif d'alimentation est relié
aux bornes opposées d'un pont de diode, ce pont étant monté en
série entre ladite alimentation et l'électrode (Fig. 3).

CIRCUIT D'APPOINT DE COMMANDE DE LA TENSION POUR SOUDEUSE ÉLECTRIQUE

FIG. 1

DISPOSITIF D'ALIMENTATION

DA

ÉLECTRODE

C.A.

DA'

DISPOSITIF DE DÉTECTION ET D'EXCITATION

L1

L2

**FIG. 2**

PIÈCE

C.A.

D7

D8

ÉLECTRODE

DISPOSITIF D'ALIMENTATION

D9

D10

DISPOSITIF DE DÉTECTION ET D'EXCITATION

**FIG. 3**

PIÈCE

Office européen
des brevets

**RAPPORT DE RECHERCHE EUROPEENNE**

**0081106**
Numéro de la demande

EP 82 11 0573

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,Y | FR-A-2 133 609 (MESSER GRIESHEIM) * Page 13 * | 1-6,9, 15,18 | B 23 K 9/10 |
| Y | FR-A-2 395 805 (SQUARE D) * Figures 6,7; pages 29,30 * | 1-18 | |
| Y | FR-A-1 067 599 (LICENTIA) * Page 2, abrégé * | 1,15 | |

DOMAINES TECHNIQUES RECHERCHES (Int. Cl. ³)

B 23 K 9/00

Le présent rapport de recherche a été établi pour toutes les revendications

| Lieu de la recherche | Date d'achèvement de la recherche | Examinateur |
|---|---|---|
| LA HAYE | 18-03-1983 | HOORNAERT W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82